# EUROPEAN PATENT APPLICATION

(11) **EP 4 659 951 A1**
(43) Date of publication of application: **10.12.2025**
(21) Application number: 24216385.5
(22) Date of filing: 29.11.2024
(51) Int. Cl.: B32B 5/02, B32B 5/26, B32B 27/12, B32B 27/36

(54) **PET FLOORBOARD AND PREPARATION METHOD THEREOF**

(30) Priority: 07.06.2024 CN 202410739228
(71) Applicant: Jiangsu Zhongsheng New Building Materials Co., Ltd., Zhenjiang, Jiangsu Province 212444 (CN); Tong, Yi, Jurong City, Jiangsu Province (CN); Wan, Xiangsheng, Jurong City, Jiangsu Province (CN); Wan, Jimin, Jurong City, Jiangsu Province (CN)
(72) Inventor: TONG, Yi, Jurong City, Jiangsu Province (CN); WAN, Xiangsheng, Jurong City, Jiangsu Province (CN); WAN, Jimin, Jurong City, Jiangsu Province (CN)
(74) Representative: Chung, Hoi Kan

(57) **Abstract**

A method for preparing a PET floorboard comprises: hot-melt compounding a printing layer and a wear-resistant layer to obtain a composite layer; providing at least one PET felt panel on the backside of the printing layer of the composite layer, and then performing hot-pressing for fusion attachment and cold-pressing for shaping to obtain a composite panel; coating at least one UV paint layer on the surface of the wear-resistant layer of the composite panel, and then cutting into required sizes and processing edges to obtain the PET floorboard. The PET floorboard provided by the invention has such good flexibility that it will not crack or be defaced when being folded in half around a metal shaft with a diameter of 12.7 mm. Moreover, the PET floorboard is light, has a density of only 700-1000 kg/m³, and has excellent dimensional stability against high and low temperatures and safety.

## Description

### TECHNICAL FIELD

The embodiments of present disclosure relate to the technical field of floorings, and particularly to a PET floorboard and a preparation method thereof.

### BACKGROUND

PET (polyethylene terephthalate) floorboards have better hygiene and safety and higher recovery rate than conventional PVC (polyvinyl chloride) floors, and their mechanical properties are little affected by high and low temperatures.

For the existing PET floorboards, for example, a hard PET high-density plate (density of about 1,800-2,200 kg/m³) that is prepared by the extrusion process involving extruding of the mixture of PET particles, fillers (such as stone powder) and other additives such as modifiers, they are only suitable for installation through locking mechanism after being slotted at their edges, and thus have limited application. Moreover, due to the strong hardness and insufficient toughness, the existing products cannot pass the flexibility test (ASTM F137-08), which requires higher ground flatness.

In view of this, the present disclosure is proposed.

### SUMMARY

The embodiments of the present disclosure provide a PET floorboard and a preparation method thereof. As being made from a semi-hard material with a density of about 700-1000 kg/m³, the PET floorboard product only needs to be processed to have bevel edges and then can be installed using glue. The product has simple process, good adaptability (i.e., low requirement for floor flatness), enlarged application range, and at the same time retains the benefits of PET materials including food-grade hygiene, environmental friendliness, recyclability and dimensional stability under heat, and thus has a good application prospect.

In order to achieve the above objectives, the embodiments of the present disclosure provide the following technical solutions:

According to a first aspect of the embodiments of the present disclosure, the present disclosure provides a method for preparing a PET floorboard. The method comprises:
(1) hot-melt compounding a printing layer and a wear-resistant layer to obtain a composite layer;
(2) providing at least one PET felt panel on the backside of the printing layer of the composite layer, and then performing hot-pressing for fusion attachment and cold-pressing for shaping to obtain a composite panel;
(3) coating at least one ultra-violet ray (UV) paint layer on the surface of the wear-resistant layer of the composite panel, and then cutting into required sizes and processing edges to obtain the PET floorboard.

In some preferred embodiments, the printing layer is made of polyethylene terephthalate-I ,4-cyclohexanedimeth yleneterephthalate (PETG) material, has a density of 1300-1400 kg/m³ and a thickness of 0.05-0.15 mm;

The wear-resistant layer is made of PETG material, has a density of 1300-1400 kg/m³ and a thickness of 0.05-0.7 mm;

The PET felt has a grammage of 1-10 kg/m², a density of 150-450 kg/m³, and a thickness of 3-30 mm;

The UV paint is acrylate or polyurethane and has a grammage of 5-60 g/m².

In some specific embodiments, the PET fibers are hot-pressed and preset by using a customized mold based on the requirements of finished products, so that the PET felt panel with controllable density and relatively uniform density can be obtained.

In some specific embodiments, the plurality of PET felt panels have different densities or thicknesses, to allow the adjustment to the curling of the floor after being heated and the flatness at normal temperature.

In some preferred embodiments, the method comprises preparing the composite panel by overlapping the plurality of PET felt panels and a glass fiber layer, and then performing the hot-pressing for fusion attachment and the cold-pressing for shaping, so that in the composite panel, the plurality of PET felt panels are arranged on the backside of the printing layer of the composite layer, and the glass fiber layer is arranged between the plurality of PET felt panels.

The glass fiber layer provided by the present disclosure is configured to adjust the curling of the floor after being heated and the flatness at normal temperature, and to improve the dimensional stability of the floor under heat.

In some preferred embodiments, the glass fiber layer is made of glass fiber felt whose surface has been dipped with an adhesive and has a grammage of 150-500 g/m², or made of grid glass fiber whose surface has been dipped with an adhesive and has a grammage of 20-120 g/m².

In some preferred embodiments, the method comprises preparing the composite panel by overlapping at least one PET felt panel and a base film layer, then performing the hot-pressing for fusion attachment and the cold-pressing for shaping, so that in the composite panel the base film layer is arranged on the backside of the outermost PET felt panel of the at least one PET felt panel.

In some preferred embodiments, the base film layer is made of PETG material, has a density of 1300-1400 kg/m³ and a thickness of 0.05-0.30 mm.

The PETG base film provided by the present disclosure is configured to adjust the curling of the floor after being heated and the flatness at normal temperature, and to improve the appearance of the backside of the floor.

In some preferred embodiments, the method further comprises attaching a floor mat layer on the bottommost layer of the PET floorboard by using an adhesive.

In some preferred embodiments, the floor mat layer is made of irradiation cross-linked polyethylene (IXPE) or ethylene vinyl acetate (EVA) foam material, has a density of 50-200 kg/m³ and a thickness of 0.5-3.0 mm.

In some preferred embodiments, the hot melt compounding is conducted under 140-210°C by rolling and bonding; the hot-pressing for fusion attachment is conducted under a temperature of 120-240°C, a pressure of 1-15 MPa, for 120-1200 s; the cold-pressing for shaping is conducted under cooling with circulating water at normal temperature (5-35°C), a pressure of 3-25 MPa, and for 150-1500 s.

In some preferred embodiments, the method further comprises: sequentially performing heat treatment, cold treatment and standing treatment on the obtained PET floorboard, wherein the heat treatment is conducted under a temperature of 70-140°C for 15-150 s; the cold treatment is conducted under a temperature of 10-50°C for 30-300 s; the standing treatment is standing at 20-28°C for 12-72 h;

Preferably, the heat treatment and the cold treatment are repeated for 1-2 times before the standing treatment.

Through the above heat treatment and cold treatment, the internal stress of the floor can be released to improve the dimensional stability of the floor under heat.

According to a second aspect of the embodiments of the present disclosure, the present disclosure provides a PET floorboard made by any one of the above methods.

The embodiment of the present disclosure has the following advantages:
1. In the embodiments of present disclosure, loose and soft PET felt panels are used as the raw material of the floor substrate, a plurality of plates of which are compounded to manufacture the PET floorboard, so that the PET floorboard has such good flexibility that it will not crack or be defaced when being folded in half around a metal shaft with a diameter of 12.7 mm according to the test method ASTM F137. Moreover, the PET floorboard is light, has a density of only 700-1000 kg/m³, and has excellent dimensional stability against high and low temperatures.
2. The embodiments of the present disclosure have simple process, strong operability and good market popularization and application value.
3. The main material used in the embodiments of the present disclosure is food-grade PET, which has better hygiene and safety and higher recovery rate than the traditional plastic floor.

### BRIEF DESCRIPTION OF DRAWINGS

For more clearly illustrating embodiments of the present disclosure or technical solutions in the conventional technology, the drawing needed in describing the embodiments or the conventional technology will be briefly described hereinafter. Apparently, the drawings in the following description are only exemplary, and for those skilled in the art, other implementation drawings may be obtained by extension according to the provided drawings without any creative efforts.
FIG. 1 is a schematic structural diagram of a PET floorboard provided in Example 1 of the present disclosure.
FIG. 2 is a schematic structural diagram of a PET floorboard provided in Example 2 of the present disclosure.
FIG. 3 is a schematic structural diagram of a PET floorboard provided in Comparative Example 1 of the present disclosure.

In the figures: 1, UV layer; 2, wear-resistant layer; 3, printing layer; 4, first PET felt panel; 5, second PET felt panel; 6, third PET felt panel; 7, glass fiber layer; 8, base film; 9, floor mat layer; 10, PET layer.

### DETAILED DESCRIPTION OF THE EMBODIMENTS

The following specific examples illustrate the implementation of the present disclosure. Those persons familiar with the technology can easily understand the other advantages and effects of the present disclosure from the content disclosed in this specification. It is apparent that the described examples are only a part of the examples according to the present disclosure, rather than all of the examples. All other examples obtained by those skilled in the art based on the examples in the present disclosure without any creative work belong to the scope of protection of the present disclosure.

The printing layer is made of PETG.

The PET felt panel is made of PET fiber felt.

The wear-resistant layer is made of PETG.

The glass fiber layer is glass fiber felt or grid glass fibers whose surface has been dipped with an adhesive.

The UV paint contains acrylate or polyurethane and has a grammage of 5-100 g.

The base film layer is made of PETG.

The mat layer is made of IXPE or EVA foam material.

### Example 1

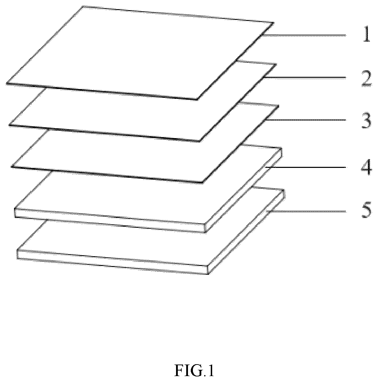

This example provides a PET floorboard (see FIG. 1) including a UV layer 1, a wear-resistant layer 2, a printing layer 3, a first PET felt panel 4 and a second PET felt panel 5 in sequence from top to bottom.

The preparation method of the PET floorboard is as follows.
(1) A printing layer with a thickness of 0.08 mm and a wear-resistant layer with a thickness of 0.15 mm were roll-pressed at 180°C to allow them attach and form a composite layer.
(2) The composite layer obtained in step (1), a first PET felt with a thickness of 7 mm, a grammage of 1.6 kg/m² and a density of about 230 kg/m³, a second PET felt with a thickness of 8 mm, a grammage of 1.8 kg/m² and a density of about 230 kg/m³ were overlapped in sequence, with the printing layer of the composite layer being attached to the first PET felt. Then, under 165°C and an atmosphere of 0.1 standard atmospheric pressure, they were hot-pressed in stages to allow them to fuse and attach for 90 s, 120 s and 480 s under the pressures of 5 MPa, 6 MPa and 7 MPa respectively. Next, they were cooled with water at normal temperature of 20°C under an atmosphere of 0.1 standard atmospheric pressure, while being cold-pressed in stages to allow them be shaped for 90 s, 120 s and 540 s under the pressure of 8 MPa, 10 MPa and 15 MPa respectively. Then, a composite panel was obtained.
(3) The UV paint was coated on the surface of the wear-resistant layer of the composite panel obtained in the step (2) (coating at 18 g/m² twice with top coat and primer).
(4) The composite panel coated with UV paint was heat-treated at 95°C for 150 s, and then cooled in water bath at 30°C for 150 s.
(5) The resulted plate was allowed to stand at 25°C for 48 h and then punched into PET floorboards.

### Example 2

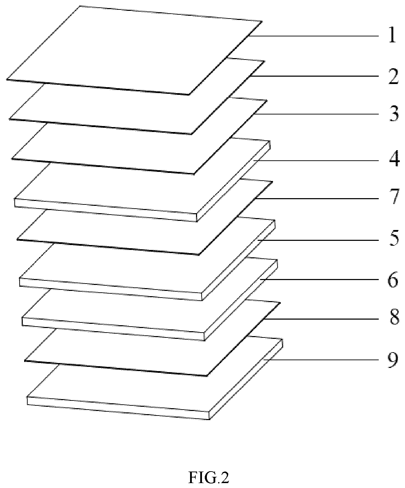

This example provides a PET floorboard (see FIG.2) including a UV layer 1, a wear-resistant layer 2, a printing layer 3, a first PET felt panel 4, a glass fiber layer 7, a second PET felt panel 5, a third PET felt panel 6, a base film layer 8 and a floor mat layer 9 in sequence from top to bottom.

The preparation method of the PET floorboard is as follows.
(1) The printing layer with a thickness of 0.08 mm and the wear-resistant layer with a thickness of 0.15 mm were roll-pressed and bonded at 180°C to obtain the composite layer.
(2) The composite layer obtained in step (1), a first PET felt with a thickness of 7 mm, a grammage of 1.6 kg/m² and a density of about 230 kg/m³, a grid glass fiber layer with a grammage of 35 g/m² and surface dipped with an adhesive; a second PET felt with a thickness of 7 mm, a grammage of 1.6 kg/m² and a density of about 230 kg/m³, a third PET felt with a thickness of 8 mm, a grammage of 1.9 kg/m² and a density of about 240 kg/m³, and a PETG film being as a base film layer with a thickness of 0.1 mm and a density of about 1350 kg/m³ were overlapped in sequence, with the printing layer of the composite layer being attached to the first PET felt. Then, under 165°C and an atmosphere of 0.1 standard atmospheric pressure, they were hot-pressed in stages to allow them to fuse and attach for 120 s, 120 s and 540 s under the pressure of 6 MPa, 7 MPa and 8 MPa respectively. Next, they were cooled with water at normal temperature of 20°C under an atmosphere of 0.1 standard atmospheric pressure, while being cold-pressed in stages to allow them be shaped for 120 s, 120 s and 600 s under the pressure of 9 MPa, 10 MPa and 15 MPa, respectively. Then, a composite panel was obtained.
(3) The UV paint was coated on the surface of the wear-resistant layer of the composite panel obtained in the step (2) (coating twice at 18 g/m² with top coat and primer).
(4) The composite panel obtained in step (3) was heated at 95°C for 150 s, then cooled in water bath at 30°C for 150 s, and finally stood at 25°C for 48 h and then punched into small pieces of composite panel.

(3) An IXPE foamed floor mat with a density of 100 kg/m³ and a thickness of 1.0 mm was attached by hot melt adhesive to the backside of the small pieces of composite panel obtained in step (4), which resulted in PET floorboards.

### Comparative example 1

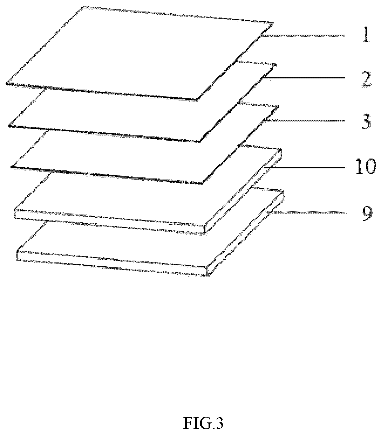

This comparative example provides a PET floorboard (see FIG.3,) including a UV layer 1, a wear-resistant layer 2, a printing layer 3, a hard PET layer 10 and a floor mat layer 8 in sequence from top to bottom.

The preparation method of the PET floorboard is as follows.
(1) The printing layer with a thickness of 0.08 mm and the wear-resistant layer with a thickness of 0.15 mm were roll-pressed at 180°C to allow them to attach, and the back of the printing layer was dipped with an adhesive to obtain a composite layer.
(2) A hard PET layer mixed with stone powders was prepared using the screw extrusion process.
(3) The composite layer and the hard PET layer with a thickness of 3.8 mm and a density of 2,000 kg/m³ were overlapped in sequence, and then under 150°C and an atmosphere of 0.1 standard atmospheric pressure, they were hot-pressed in stages to allow them to fuse and attach for 90 s, 120 s and 480 s under the pressure of 2 MPa, 3 MPa and 4 MPa respectively. Next, they were cooled with water at normal temperature of 20°C under an atmosphere of 0.1 standard atmospheric pressure, while being cold-pressed in stages to allow them be shaped for 90 s, 120 s and 540 s under the pressure of 5 MPa, 8 MPa and 14 MPa respectively. Then, a composite panel was obtained.
(4) The UV paint was coated on the surface of the wear-resistant layer of the composite panel (coating at 18 g/m² twice with top coat and primer).
(5) The composite panel obtained in step (4) was heated at 85°C for 90 s, and then cooled in water bath at 30°C for 150 s. Next, the plate was allowed to stand at 25°C for 48 h and then punched. After standing at normal temperature for 24 h, the floor was grooved to obtain small pieces of composite panel.
(6) An IXPE foamed floor mat with a density of 100 kg/m³ and a thickness of 1.0 mm was attached by hot melt adhesive to the backside of the small pieces of composite panel obtained in step (5), which resulted in PET floorboards.

### Test Example 1

### 1. Flexibility test

Flexibility test method (ASTM F137-08) is as follows:
(1) Punch out a specimen with a length of 9 in.(225 mm) and a width of 2±0.05 in.(50±1.27 mm).
(2) Place the specimen over a mandrel with the wearing surface face out and the major axis of the specimen perpendicular to the major axis of the mandrel; bend the material around the mandrel at a uniform rate through a 180° angle while holding the specimen at each end; take 3 to 5 seconds to complete the bend.
(3) Examine the specimen face visually in the bent position for breaks, cracks, or other damage at the completion of the bending operation.
(4) Determine the smallest mandrel around which the material may be bent without showing breaks, cracks, or other damage. To do this, estimate the size of the mandrel over which the specimen will not break. Then use a series of mandrels with diameters of 0.25 in.(6.4 mm) to 5 in.(127 mm), each one consecutively smaller than the first, until breaks or cracks are exhibited. (perform the testing twice).

| **Table 1 Test Results of PET floorboards of Examples 1-2 and Comparative Example 1** | |
|---|---|
| **Sample** | **diameter of the smallest mandrel** |
| Example 1 | passed relative to the mandrel with a diameter of 0.5 in.(12.7mm) |
| Example 2 | passed relative to the mandrel with a diameter of 0.5 in.(12.7mm) |
| Comparative example 1 | failed relative to the mandrel with a diameter of 5.0 in.(127.0mm) |

### 2. Density test

The test specimens were punched into a size of about 2.0 × 4.0 cm and tested by using a solid densitometer. Note that the IXPE foamed floor mat layer was removed from the samples of Example 2 and Comparative Example 1 before the test.

| **Table 2 Test Results** | | | | | | | |
|---|---|---|---|---|---|---|---|
| **Sample** | **Densities** | **A** | **B** | **C** | **D** | **E** | **Average value** |
| Example 1 | Density 1000 kg/m³ | 0.853 7 | 0.8583 | 0.8508 | 0.8585 | 0.8567 | 0.8555 |
| Example 2 | Density 1000 kg/m³ | 0.855 3 | 0.8497 | 0.8519 | 0.8571 | 0.8541 | 0.8536 |
| Comparativ e example 1 | Density 1000 kg/m³ | 1.997 8 | 1.9896 | 2.0018 | 1.9981 | 1.9954 | 1.9965 |
| PVC floorboard | Density 1000 kg/m³ | 1.786 3 | 1.7851 | 1.7798 | 1.7847 | 1.7856 | 1.7843 |

### 3. Dimensional stability test

### Dimensional change after heating exposure:

After 24 hours of standing at room temperature of 24±1°C, the initial dimensions of the specimen were recorded. After 6±0.25 hours of exposure to heat by placing the specimen inside a thermostatic blast oven at 81±1°C and 24 hours of standing at room temperature of 24±1°C, the dimensions of the specimen after heating exposure were recorded.

### Dimensional change after cooling exposure:

After 24 hours of standing at room temperature of 24±1°C, the initial dimensions were recorded. After 6±0.25 hours of exposure to cooling by placing the specimen inside a cryostat cabinet at -5±1°C and 24 hours of standing at room temperature of 24±1°C, the dimensions of the specimen after cooling exposure were recorded.

**Tables 3-6 shows the test results of PET floorboards and PVC floorboard of Examples 1-2 and Comparative Example 1.**

| **Table 3 Dimensional Stability Test of PET floorboard of Example 1** | | | | | | |
|---|---|---|---|---|---|---|
| **Dimension change after heating exposure** | | | | | | |
| Number | Length 1/mm | | | Length 2/mm | | |
| | Before heating exposure | After heating exposur e | Rate of change | Before heating exposure | After heating exposure | Rate of change |
| 2-1 | 307.62 | 307.59 | -0.010% | 308.02 | 307.98 | -0.013% |
| 2-2 | 301.33 | 301.28 | -0.017% | 301.42 | 301.38 | -0.013% |
| 2-3 | 306.62 | 306.57 | -0.016% | 306.36 | 306.31 | -0.016% |
| 2-4 | 301.41 | 301.36 | -0.017% | 301.48 | 301.44 | -0.013% |
| Average value of change | -0.014% | | | | | |

| Number | Wide 1/mm | | | Wide 2/mm | | |
|---|---|---|---|---|---|---|
| | Before heating exposure | After heating exposur e | Rate of change | Before heating exposure | After heating exposure | Rate of change |
| 2-5 | 191.40 | 191.37 | -0.016% | 191.34 | 191.31 | -0.016% |
| 2-6 | 191.69 | 191.67 | -0.010% | 191.42 | 191.38 | -0.021% |
| 2-7 | 191.44 | 191.41 | -0.016% | 191.33 | 191.32 | -0.005% |
| 2-8 | 191.06 | 191.03 | -0.016% | 191.42 | 191.39 | -0.016% |
| Average value of change | -0.014% | | | | | |

| **Dimensional change after cooling exposure** | | | | | | |
|---|---|---|---|---|---|---|
| Number | Length 1/mm | | | Length 2/mm | | |
| | Before cooling exposure | After cooling exposur e | Rate of change | Before freezing | After cooling exposure | Rate of change |
| 2-a | 307.61 | 307.60 | -0.003% | 307.90 | 307.88 | -0.006% |
| 2-b | 307.67 | 307.67 | 0.000% | 306.36 | 306.35 | -0.003% |
| 2-c | 306.64 | 306.63 | -0.003% | 306.21 | 306.19 | -0.007% |
| 2-d | 306.84 | 306.82 | -0.007% | 306.90 | 306.86 | -0.013% |
| Average value of change | -0.005% | | | | | |

| Number | Wide 1/mm | | | Wide 2/mm | | |
|---|---|---|---|---|---|---|
| | Before cooling exposure | After cooling exposur e | Rate of change | Before cooling exposure | After cooling exposure | Rate of change |
| 2-e | 191.36 | 191.36 | 0.000% | 191.29 | 191.28 | -0.005% |
| 2-f | 191.43 | 191.42 | -0.005% | 191.32 | 191.31 | -0.005% |
| 2-g | 191.64 | 191.63 | -0.005% | 191.35 | 191.35 | 0.000% |
| 2-h | 191.27 | 191.27 | 0.000% | 191.36 | 191.36 | 0.000% |
| Average value of change | -0.003% | | | | | |

| **Table 4 Dimensional Stability Test of PET floorboard of Example 2** | | | | | | |
|---|---|---|---|---|---|---|
| **Dimension change after heating exposure** | | | | | | |
| Number | Length 1/mm | | | Length 2/mm | | |
| | Before heating exposure | After heating exposure | Rate of change | Before heating exposure | After heating exposure | Rate of change |
| 1-1 | 346.54 | 346.50 | -0.012% | 346.49 | 346.46 | -0.009% |
| 1-2 | 345.43 | 345.41 | -0.006% | 345.51 | 345.50 | -0.003% |
| 1-3 | 345.07 | 345.05 | -0.006% | 344.94 | 344.90 | -0.012% |
| 1-4 | 345.71 | 345.67 | -0.012% | 345.50 | 345.48 | -0.006% |
| Average value of change | -0.008% | | | | | |

| Number | Wide 1/mm | | | Wide 2/mm | | |
|---|---|---|---|---|---|---|
| | Before heating exposure | After heating exposure | Rate of change | Before heating exposure | After heating exposure | Rate of change |
| 1-5 | 188.22 | 188.21 | -0.005% | 188.37 | 188.35 | -0.011% |
| 1-6 | 188.37 | 188.35 | -0.011% | 188.36 | 188.35 | -0.005% |
| 1-7 | 188.37 | 188.35 | -0.011% | 188.25 | 188.22 | -0.016% |
| 1-8 | 188.35 | 188.33 | -0.011% | 188.37 | 188.35 | -0.011% |
| Average value of change | -0.010% | | | | | |

| **Dimensional change after cooling exposure** | | | | | | |
|---|---|---|---|---|---|---|
| Number | Length 1/mm | | | Length 2/mm | | |
| | Before cooling exposure | After cooling exposure | Rate of change | Before cooling exposure | After cooling exposure | Rate of change |
| 2-a | 345.38 | 345.38 | 0.000% | 345.57 | 345.56 | -0.003% |
| 2-b | 345.49 | 345.48 | -0.003% | 345.41 | 345.41 | 0.000% |
| 2-c | 345.99 | 345.97 | -0.006% | 346.02 | 345.99 | -0.009% |
| 2-d | 345.09 | 345.08 | -0.003% | 345.21 | 345.20 | -0.003% |
| Average value of change | -0.003% | | | | | |

| Number | Wide 1/mm | | | Wide 2/mm | | |
|---|---|---|---|---|---|---|
| | Before cooling exposure | After cooling exposure | Rate of change | Before cooling exposure | After cooling exposure | Rate of change |
| 2-e | 187.02 | 187.01 | -0.005% | 186.98 | 186.96 | -0.011% |
| 2-f | 187.04 | 187.04 | 0.000% | 187.02 | 187.01 | -0.005% |
| 2-g | 187.08 | 187.07 | -0.005% | 187.07 | 187.06 | -0.005% |
| 2-h | 186.98 | 186.98 | 0.000% | 187.01 | 187.00 | -0.005% |
| Average value of change | -0.005% | | | | | |

| **Table 5 Dimensional Stability Test of PET floorboard of Comparative Example 1** | | | | | | |
|---|---|---|---|---|---|---|
| **Dimension change after heating exposure** | | | | | | |
| Number | Length 1/mm | | | Length 2/mm | | |
| | Before heating exposure | After heating exposure | Rate of change | Before heating exposure | After heating exposure | Rate of change |
| 3-1 | 295.69 | 295.59 | -0.034% | 295.60 | 295.54 | -0.020% |
| 3-2 | 294.49 | 294.44 | -0.017% | 294.26 | 294.20 | -0.020% |
| 3-3 | 294.27 | 294.21 | -0.020% | 293.93 | 293.83 | -0.034% |
| 3-3 | 296.53 | 296.45 | -0.027% | 296.65 | 296.61 | -0.013% |
| Average value of change | -0.023% | | | | | |

| Number | Wide 1/mm | | | Wide 2/mm | | |
|---|---|---|---|---|---|---|
| | Before heating exposure | After heating exposure | Rate of change | Before heating exposure | After heating exposure | Rate of change |
| 3-5 | 183.07 | 183.03 | -0.022% | 183.05 | 183.03 | -0.011% |
| 3-6 | 183.06 | 183.01 | -0.027% | 183.02 | 182.98 | -0.022% |
| 3-7 | 183.00 | 182.98 | -0.011% | 183.04 | 183.01 | -0.016% |
| 3-8 | 183.05 | 183.01 | -0.022% | 183.03 | 182.99 | -0.022% |
| Average value of change | -0.019% | | | | | |

| **Dimensional change after cooling exposure** | | | | | | |
|---|---|---|---|---|---|---|
| Number | Length 1/mm | | | Length 2/mm | | |
| | Before cooling exposure | After cooling exposure | Rate of change | Before cooling exposure | After cooling exposure | Rate of change |
| 3-a | 293.35 | 293.34 | -0.003% | 293.34 | 293.31 | -0.010% |
| 3-b | 292.90 | 292.86 | -0.014% | 292.62 | 292.59 | -0.010% |
| 3-c | 293.79 | 293.76 | -0.010% | 293.66 | 293.64 | -0.007% |
| 3-d | 294.74 | 294.69 | -0.017% | 294.76 | 294.69 | -0.024% |
| Average value of change | -0.012% | | | | | |

| Number | Wide 1/mm | | | Wide 2/mm | | |
|---|---|---|---|---|---|---|
| | Before cooling exposure | After cooling exposure | Rate of change | Before cooling exposure | After cooling exposure | Rate of change |
| 3-e | 183.05 | 183.04 | -0.005% | 183.05 | 183.04 | -0.005% |
| 3-f | 183.05 | 183.01 | -0.022% | 182.95 | 182.92 | -0.016% |
| 3-g | 183.06 | 183.04 | -0.011% | 183.02 | 182.99 | -0.016% |
| 4-h | 183.07 | 183.07 | 0.000% | 183.03 | 183.02 | -0.005% |
| Average value of change | -0.010% | | | | | |

| **Table 6 Dimensional Stability Test of Existing PVC Floorboard** | | | | | | |
|---|---|---|---|---|---|---|
| **Dimension change after heating exposure** | | | | | | |
| Number | Length 1/mm | | | Length 2/mm | | |
| | Before heating exposure | After heating exposure | Rate of change | Before heating exposure | After heating exposure | Rate of change |
| 4-1 | 327.48 | 327.28 | -0.061% | 327.66 | 327.47 | -0.058% |
| 4-2 | 327.56 | 327.39 | -0.052% | 327.64 | 327.48 | -0.049% |
| 4-3 | 326.70 | 326.45 | -0.077% | 326.43 | 326.21 | -0.067% |
| 4-4 | 325.50 | 325.40 | -0.031% | 325.68 | 325.54 | -0.043% |
| Average value of change | -0.055% | | | | | |

| Number | Wide 1/mm | | | Wide 2/mm | | |
|---|---|---|---|---|---|---|
| | Before heating exposure | After heating exposure | Rate of change | Before heating exposure | After heating exposure | Rate of change |
| 4-5 | 188.22 | 188.16 | -0.032% | 188.37 | 188.27 | -0.053% |
| 4-6 | 188.37 | 188.30 | -0.037% | 188.36 | 188.30 | -0.032% |
| 4-7 | 188.37 | 188.28 | -0.048% | 188.25 | 188.17 | -0.042% |
| 4-8 | 188.35 | 188.30 | -0.027% | 188.36 | 188.29 | -0.037% |
| Average value of change | -0.038% | | | | | |

| **Dimensional change after cooling exposure** | | | | | | |
|---|---|---|---|---|---|---|
| Number | Length 1/mm | | | Length 2/mm | | |
| | Before cooling exposure | After cooling exposure | Rate of change | Before cooling exposure | After cooling exposure | Rate of change |
| 4-a | 326.92 | 326.85 | -0.021% | 326.94 | 326.86 | -0.024% |
| 4-b | 327.44 | 327.36 | -0.024% | 327.10 | 327.01 | -0.028% |
| 4-c | 326.48 | 326.42 | -0.018% | 326.35 | 326.28 | -0.021% |
| 4-d | 326.44 | 326.37 | -0.021% | 326.89 | 326.81 | -0.024% |
| Average value of change | -0.023% | | | | | |

| Number | Wide 1/mm | | | Wide 2/mm | | |
|---|---|---|---|---|---|---|
| | Before cooling exposure | After cooling exposure | Rate of change | Before cooling exposure | After cooling exposure | Rate of change |
| 4-e | 187.02 | 186.97 | -0.027% | 186.98 | 186.94 | -0.021% |
| 4-f | 187.04 | 187.00 | -0.021% | 187.02 | 186.99 | -0.016% |
| 4-g | 187.08 | 187.05 | -0.016% | 187.07 | 187.03 | -0.021% |
| 4-h | 186.98 | 186.94 | -0.021% | 187.01 | 186.97 | -0.021% |
| Average value of change | -0.021% | | | | | |

Although the present disclosure has been described in detail above with general descriptions and specific examples, it is apparent to those skilled in the art that some modifications or improvements can be made on the basis of the present disclosure. Thus, these modifications or improvements made without departing from the spirit of the present disclosure should belong to the scope of the claimed invention.

## Claims

1. A method for preparing a polyethylene terephthalate (PET) floorboard, comprising:
(1) hot-melt compounding a printing layer and a wear-resistant layer to obtain a composite layer;
(2) providing at least one PET felt panel on a backside of the printing layer of the composite layer, and then performing hot-pressing for fusion attachment and cold-pressing for shaping to obtain a composite panel; and
(3) coating at least one ultra-violet ray (UV) paint layer on a surface of the wear-resistant layer of the composite panel, and then cutting into required sizes and processing edges to obtain the PET floorboard.

2. The method for preparing the PET floorboard according to claim 1, wherein,
the printing layer is made of polyethylene terephthalate-I ,4-cyclohexanedimeth yleneterephthalate (PETG) material, has a density of 1300-1400 kg/m³ and a thickness of 0.05-0.15 mm;
the wear-resistant layer is made of PETG material, has a density of 1300-1400 kg/m³ and a thickness of 0.05-0.7 mm;
the PET felt panel has a grammage of 1-10 kg/m², a density of 150-450 kg/m³, and a thickness of 3-30 mm; and
the UV paint is acrylate or polyurethane, has a grammage of 5-60 g/m².

3. The method for preparing the PET floorboard according to claim 2, comprising preparing the composite panel by overlapping a plurality of PET felt panels and a glass fiber layer, and then performing the hot-pressing for fusion attachment and the cold-pressing for shaping,
wherein in the prepared composite panel the plurality of PET felt panels are arranged on the backside of the printing layer of the composite layer, and the glass fiber layer is arranged between the plurality of PET felt panels.

4. The method for preparing the PET floorboard according to claim 3, wherein the glass fiber layer is made of glass fiber felt whose surface has been dipped with an adhesive and has a grammage of 150-500 g/m²,
or the glass fiber layer is made of grid glass fiber whose surface has been dipped with an adhesive and has a grammage of 20-120 g/m².

5. The method for preparing the PET floorboard according to claim 1, comprising preparing the composite panel by overlapping at least one PET felt panel and base film layer, then performing the hot-pressing for fusion attachment and the cold-pressing for shaping,
wherein in the prepared composite panel the base film layer is arranged on the backside of the outermost PET felt panel of the at least one PET felt panel.

6. The method for preparing the PET floorboard according to claim 5, wherein the base film layer is made of PETG material, has a density of 1300-1400 kg/m³ and a thickness of 0.05-0.30 mm.

7. The method for preparing the PET floorboard according to claim 1, further comprising: attaching a floor mat layer on the bottommost layer of the PET floorboard by an adhesive;
the floor mat layer is made of irradiation cross-linked polyethylene (IXPE) or ethylene vinyl acetate (EVA) foam material, has a density of 50-200 kg/m³ and a thickness of 0.5-3.0 mm.

8. The method for preparing the PET floorboard according to claim 1, wherein,
the hot-melt compounding is conducted by rolling and bonding under a temperature of 140-210°C;
the hot-pressing for fusion attachment is conducted under a temperature of 120-240° C, a pressure of 1-15 MPa, for 120-1200 s;
the cold-pressing for shaping is conducted under cooling with circulating water at normal temperature, a pressure of 3-25 MPa, for 150-1500 s.

9. The method for preparing the PET floorboard according to claim 1, further comprising sequentially performing heat treatment, cold treatment and standing treatment on the obtained PET floorboard,
wherein the heat treatment is conducted under a temperature of 70-140°C for 15-150 s, the cold treatment is conducted under a temperature of 10-50°C for 30-300 s, and the standing treatment is standing at 20-28°C for 12-72 h;
the heat treatment and the cold treatment are repeated for 1-2 times before the standing treatment.

10. A PET floorboard, made by the method according to claim 1.
